Europäisches Patentamt

European Patent Office

Office européen des brevets

(19)

(11) Numéro de publication: **0 176 877**
**B1**

(12) **FASCICULE DE BREVET EUROPEEN**

(45) Date de publication du fascicule du brevet: **26.10.88**

(21) Numéro de dépôt: **85111850.5**

(22) Date de dépôt: **19.09.85**

(51) Int. Cl.⁴: **H 01 M 4/60,** H 01 B 1/12, C 08 L 49/00

(54) **Composition à base d'un polymère conducteur électronique et son application à une matière active positive pour générateur électrochimique.**

(30) Priorité: **21.09.84 FR 8414534**

(43) Date de publication de la demande:
**09.04.86 Bulletin 86/15**

(45) Mention de la délivrance du brevet:
**26.10.88 Bulletin 88/43**

(84) Etats contractants désignés:
**AT BE CH DE FR GB IT LI LU NL SE**

(56) Documents cités:
**EP-A-0 031 444**
**EP-A-0 050 441**
**EP-A-0 104 726**
**EP-A-0 114 272**
**DE-A-3 324 768**
**US-A-4 152 491**
**US-A-4 456 548**
**US-A-4 472 489**

**CHEMICAL ABSTRACTS, vol. 100, 1984, page 20, no. 35127g, Columbus, Ohio, US; K. SOGA et al.: "Electrical and physical properties of a polyene arising from dehydrochlorination of poly(vinyl chloride)"**

(73) Titulaire: **COMPAGNIE GENERALE D'ELECTRICITE Société anonyme dite:**
**54, rue La Boétie**
**F-75382 Paris Cédex 08 (FR)**

(72) Inventeur: **Périchaud, Alain**
**La Respelido 62, rue des Polytres**
**F-13013 Marseille (FR)**
Inventeur: **Le Méhaute, Alain**
**3, route de Belleville**
**F-91190 Gif-sur-Yvette (FR)**

(74) Mandataire: **Weinmiller, Jürgen et al**
**Lennéstrasse 9 Postfach 24**
**D-8133 Feldafing (DE)**

EP 0 176 877 B1

# Description

La présente invention est due aux travaux de M. Alain LE MEHAUTE appartenant aux LABORATOIRES DE MARCOUSSIS, Centre de Recherches de la COMPAGNIE GENERALE D'ELECTRICITE, et de M. Alain PERICHAUD appartenant à l'UNIVERSITE AIX-MARSEILLE I.

La présente invention concerne une composition à base d'un polymère conducteur électronique et son application à une matière active positive pour générateur électrochimique.

Il existe des polymères présentant le long de leur chaîne de nombreuses double liaisons conjuguées, et donc susceptibles de présenter une conductivité électronique notable, ce qui n'est pas en règle générale le cas des polymères. Cette conductivité peut être modulée par dopage, ce dopage consistant à réduire ou à oxyder le polymère et à neutraliser les charges en excès par un contre ion qui peut être soit un anion soit un cation.

Ainsi parmi les polymères conducteurs électroniques on peut citer les polyanilines, le polyacétylène, le polyparaphénylène, le polysulfure de paraphénylène, le polyvinyle de paraphénylène, le polythiophène, le polypyrrole ..., ainsi que les dérivés substitués de ces corps. Le document EP—A2—114 272 décrit un générateur électrochimique dont la cathode est un polymère avec des unités triaromate-méthane, dotées de soufre.

Les énergies massiques des matières actives que l'on peu réaliser à partir de ces polymères sont en moyenne inférieures à 500 Wh/kg sous 3 volts. Ainsi, à titre d'exemple, on connaît un générateur électrochimique secondaire dont l'électrode négative est du lithium, l'électrode positive un polyacétylène dopé dont le monomère présente la formule $C_2H_2$ $(LiClO_4)_{0,3}$, l'électrolyte étant du perchlorate de lithium dans du carbonate de propylène. La tension d'un tel élément est 3,7 volts, les capacité et énergie spécifiques théoriques de la masse active positive sont 139 Ah/kg, soit 516 Wh/kg et 206 Wh/litre, mais après mise en oeuvre en générateur l'énergie massique stockée n'excède pas 100 Wh/kg.

On constate en pratique que les matières à base de polymères conducteurs électroniques n'apportent en l'état actuel de la technique aucune amélioration notable par rapport aux matériaux minéraux existants; ainsi, dans les générateurs primaires, ces matières sont moins performantes que les composés de type $MnO_2$ ou fluorure de carbone et dans les générateurs secondaires, on observe que l'on obtient de meilleurs résultats avec des matériaux minéraux tels que $NiPS_3$, $TiS_2$, $MoS_3$ qui excèdent tous en pratique 200 Wh/kg.

La présente invention a pour but de réaliser une composition à base d'un polymère conducteur électronique présentant des performances dépassant très nettement celles de matériaux déjà connus et permettant de réaliser des matières actives positives ayant en particulier une énergie massique théorique pouvant être supérieure à 1000 Wh/kg.

La présente invention a pour objet une composition à base d'un polymère conducteur électronique, caractérisée par le fait que ledit polymère et à caractère unidimensional et qu'elle comporte en outre au moins une chaîne polysulfurée, ladite chaîne formant un complexe avec ce polymère. On précise que, si le polymère de base présente bien un caractère unidimensionnel, le complex formé ne présent pas nécessairement ce caractère unidimensionnel.

Le fait que ladite chaîne forme un complexe avec le polymère signifie que le soufre a oxydé ou réduit, au moins partiellement, ledit polymère dans le complexe formé, la conductivité de la chaîne polymère étant conservée au moins en partie.

Selon un premier mode de réalisation, au moins un atome de soufre de ladite chaîne polysulfurée est greffé sur le polymère, le reste de la chaîne étant en transfert de charges avec le polymère.

Selon un autre mode de réalisation, la chaîne polysulfurée est en simple transfert de charges avec le polymère, sans existence de liaison covalente avec le polymère.

Ladite composition comporte au moins 0,7 atome de soufre par carbone du monomère dudit polymère, pour que l'on puisse obtenir la capacité massique souhaitée.

Ledit polymère peut être choisi parmi les polyacétylènes, les polyparaphénylènes, les polythiophènes, les polypyrroles, les polyanilines, et leurs dérivés substitués.

D'autres caractéristiques et avantages de l'invention apparaîtront au cours de la description suivante de modes de réalisation donnés à titre illustratif; dans le dessin annexé:

La figure 1 est un diagramme d'analyse microcalorimétrique d'un échantillon A d'une composition selon l'invention.

La figure 2 illustre les propriétés de stockage d'énergie de diverses matières active selon l'invention.

La figure 3 est une variante de la figure 2.

La figure 4 montre l'influence de la nature du polyacétylène issu de la déshydrochloruration du polychlorure de vinyle sur la capacité massique d'une matière active selon l'invention.

On s'intéresse à une composition à base de polyacétylène oxydé par la chaîne polysulfurée selon l'invention.

Il faut remarquer tout d'abord que jusqu'à ce jour, en cours de synthèse, le manipulateur a toujours essayé d'éviter toute oxydation du polyacétylène par l'oxygène car il en résulte de difficultés de dopage ultérieur, une perte de conductivité électronique et donc une diminution des performances électrochimiques attendues.

La présente invention va à l'encontre de ce principe en proposant entre autres plusieurs méthodes d'oxydation du polyacétylène pour réaliser une composition aboutissant à une matière active positive à haute activité électrochimique, l'oxydation étant cette fois réalisée par le soufre.

### Exemple 1

Selon un procédé particulièrement simple, on chauffe conjointement du polyacétylène et du soufre dans un rapport massique de 1 à 1,5; la température de chauffage est toujours inférieure à 444°C.

On prépare un mélange contenant 14,8 grammes de soufre et 10 grammes de $(CH)_x$ issu de polychlorure de vinyle déshydrochloruré. On chauffe ce mélange lentement jusqu'à 160°C pendant 16 heures sous courant d'argon, puis on procède à une trempe rapide dans la glace. On obtient une masse pulvérulente noire qui s'effritte au toucher pour donner une poudre très finement divisée (échantillon A).

Afin de mettre en évidence la structure du produit on réalise une analyse microcalorimétrique.

Cet essai est effectué de la manière suivante. Dans une capsule tarée d'aluminium, on pèse 50 mg d'échantillon A; la capsule est sertie et mise en place dans le tube calorimétrique d'un DSC2 Perkin Elmer. On mesure un apport de puissance thermique c (en ordonnées -microcalories par seconde) en fonction de la température T (en abscisses — degrés Kelvin). La vitesse de montée en température est fixée à 20°C par minute.

On obtient la courbe III que l'on compare à la courbe I du soufre seul et à la courbe II du polyacétylène seul. La courbe III prouve que la chaîne polysulfurée s'est associée au polyacétylène; il apparaît un pic correspondant à un complexe soufré.

### Exemple 2

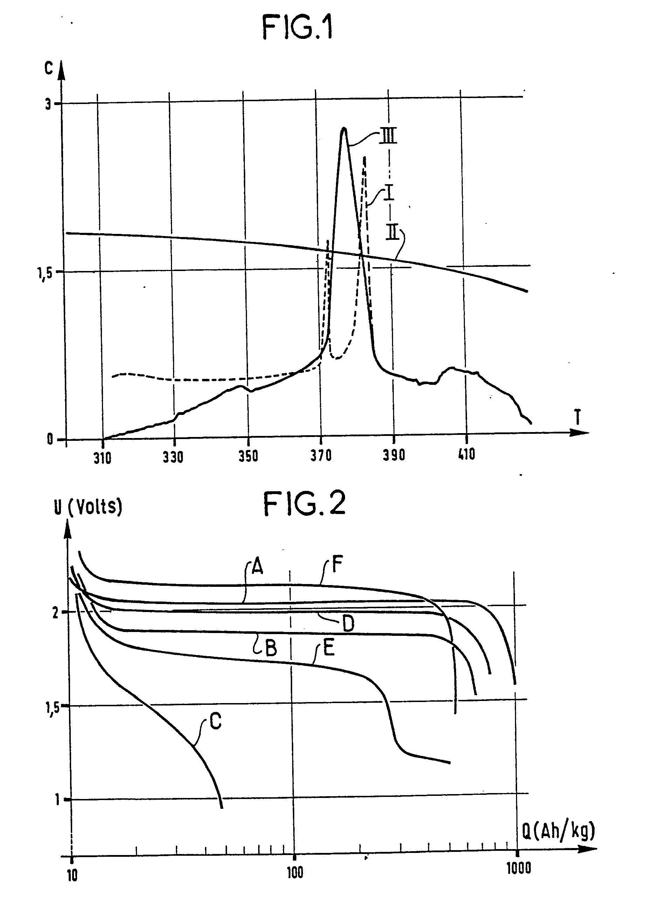

On met en solution dans 7 cm³ d'ammoniac liquide 100 mg de soufre. On met en contact cette solution avec 50 mg de polyacétylène de sorte que l'intégralité de la poudre soit mouillée par la solution. Il se produit une réaction entre les deux composés, la couleur de la solution de soufre se modifie progressivement et passe du bleu au jaune. On évapore lentement l'ammoniac liquide à une température de −20°C sous pression atmosphérique. Il s'est formé un polysulfure d'ammonium et de carbocation comme le révèle l'analyse élémentaire. Dans ce cas la longueur de la chaîne polysulfurée est limitée à $(S_6)^-$; mais cette chaîne peut être allongée par réaction directe avec du soufre à la température de 160°C. On obtient un échantillon B que l'on soumet à l'analyse DSC décrite plus haut. On obtient une courbe analogue à la courbe III de la figure 1 faisant apparaître le complexe soufré.

### Exemple 3

On procède tout d'abord à la déshydrochloruration du polychlorure de vinyle dans l'ammoniac liquide. Pour cela, on introduit dans une cellule un mélange de PVC et d'amidure de sodium en quantités stoéchiométriques.

On ferme la cellule hermétiquement et on condense l'ammoniac liquide dans la cellule sous pression atmosphérique à −40°C. La température de la cellule fermée est alors remontée jusqu'à la température ambiante et on maintient la cellule sous une pression de 8 kg/cm² pendant 10 heures. L'ammoniac est ensuite évacué sous forme gazeuse et le produit récupéré est une poudre noire constituée de polyacétylène et de chlorure de sodium. Après lavage dans l'eau désionisée et exempte d'oxygène permettant d'éliminer le chlorure de sodium, on obtient l'échantillon C.

L'échantillon C est mis en présence d'un excès de soufre et chauffé à 160°C pendant 16 heures. Le produit obtenu (Echantillon D) est un produit noir de couleur métallique qui fait apparaître en résonance magnétique nucléaire de 300 MHz une bande de relaxation à 55 ppm traduisant l'existence d'au moins quelques liaisons carbone-soufre.

### Exemple 4

On opère de la même manière que dans l'exemple 3, à ceci près que l'on introduit le soufre directement avec le PVC et l'amidure de sodium dans la cellule. Le soufre se trouve alors greffé directement lors de la déshydrochloruration. On obtient l'échantillon E.

### Exemple 5

Tous les échantillons précédents ont été obtenus à partir de polyacétylène $(CH)_x$ issu de polychlorure de vinyle déshydrochloruré. Il est toutefois possible d'opérer à partir des autres polymères conducteurs mentionnés plus haut.

C'est ainsi que l'on peut reprendre les opérations de l'exemple 1 en remplaçant le polyacétylène par du polythiophène. On introduit dans un tube scellé 7 grammes de polythiophène et 16 grammes de soufre. Le tube est porté à la température de 200°C pendant 24 heures. Le produit recueilli est l'échantillon F.

On étudie ci-dessous les propriétés de stockage d'énergie des échantillons A à F référencés ci-dessus dans un générateur électrochimique.

Chaque échantillon est mélangé avec du noir d'acétylène dans des proportions de 50% en poids. On ajoute une suspension de téflon colloïdal. La suspension est déstabilisée à l'aide d'une très faible quantité d'éthanol. Il se forme alors un mélange de téflon, de noir et de masse active, qui peut être travaillé mécaniquement. L'électrode ainsi constituée contient environ 32 mg de matière active par cm² de surface. Elle est montée dans des générateurs électrochimiques de type bouton de 1,5 cm² de surface. L'électrode négative est une électrode au lithium et le séparateur de type "Celgard" est imprégné d'une solution de Li $ClO_4$ dans du dioxolanne.

Les générateurs sont mis en décharge sous 50 µ A après avoir subi une semaine de conservation à 30°C.

La figure 2 annexée illustre les variations de la tension U (volts) en fonction de la capacité massique Q (Ah/kg) pour les différents échantillons fabriqués. Les courbes A et F amènent les remarques suivantes.

Selon le procédé de réaction directe (Echantillon A) la capacité recueillie par pile est voisine de 45 mAh, valeur de capacité recueillie sous une tension moyenne de 2,06 volts, soit une énergie moyenne stockée voisine de 93 mWh. Il en résulte que l'énergie massique disponible est voisine de 1850 Wh/kg.

Le fait que la réaction ait eu lieu avec un excès de soufre est ici de la plus grande importance puisque le même échantillon de $(CH)_x$ ayant réagi avec une quantité de soufre telle qu'un atome de soufre soit associé à chaque unité monomère ne présente qu'une capacité spécifique voisine de 550 Ah/kg.

Evidemment le milieu de synthèse peut être modifié. Ainsi, il est possible de faire la synthèse de $(CH)_x$ dans l'ammoniac (échantillon C) puis de faire la synthèse du complexe $(CH)_x$/soufre (échantillon D).

Il est également possible de faire la synthèse en un seul temps, le soufre étant alors mis en compétition pour la déshydrochloruration avec la base forte (amidure de sodium). Comme le montre l'exemple E, il en résulte une bonne efficacité du produit obtenu comparé à l'échantillon C qui concerne le produit n'ayant pas réagi avec le soufre.

Enfin il est possible de remplacer un polymère conducteur tel que $(CH)_x$ par tout autre polymère conducteur tel que le polythiophène (échantillon F).

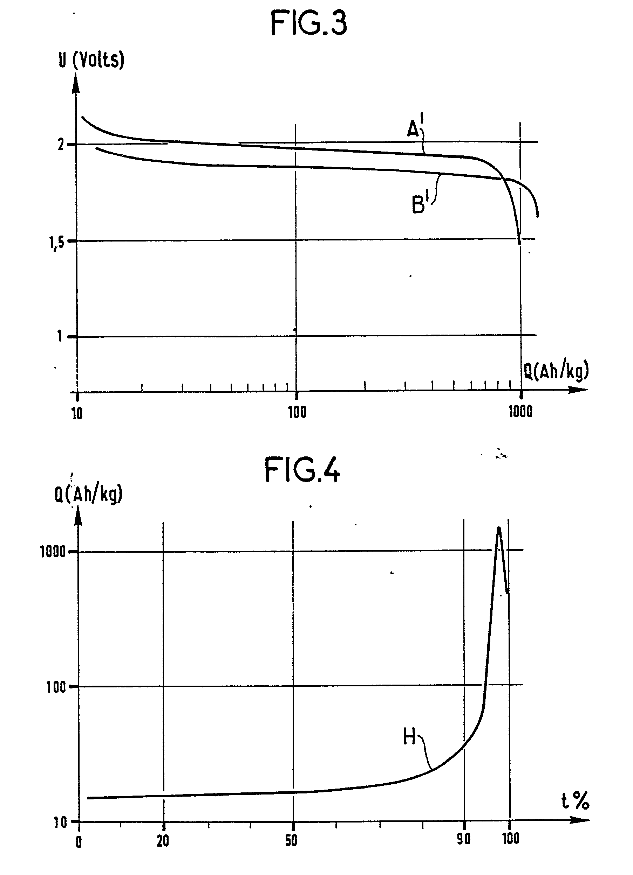

Selon une variante de mise en oeuvre, le matériau actif est mélangé dans des proportions de 50% en poids avec un noir d'acétylène; il est ensuite coprécipité avec une solution de poly-oxyéthylène et de Li $CF_3SO_3$ puis évaporé à sec jusqu'à obtention d'un film solide. Le film solide contient environ 20 mg de matériau actif par $cm^2$ d'électrode. Cette électrode est ensuite montée comme précédémment face à une électrode de lithium. La décharge est réalisée comme indiqué plus haut. Les résultats obtenus avec des échantillons A et B sont portés dans la figure 3 sous la forme des courbes A' et B'.

Dans les exemples 1 à 4 précédents il a été considéré en première approximation que la méthode de synthèse du polyacétylène $(CH)_x$ ne présentait pas une importance considérable. Il est cependant possible de montrer qu'il n'en est rien, en particulier lorsque le polyacétylène est synthétisé par déshydrochloruration du PVC. Il est en effet possible de déshydrochlorurer le PVC à divers taux: 20%, 50%, 95% et 100% par ajustement de la quantité de la base (tributoxyde de potassium, amidure de sodium . . .) sur le PVC. Le produit obtenu est mis en contact réactionnel avec le soufre (rapport molaire de 1,5) et les tests électrochimiques sont effectués selon la même procédure électrochimique que pour les échantillons A à F.

On a reporté dans la figure 4 la courbe H montrant les variations de la capacité massique Q (Ah/kg) d'un échantillon de matière active selon l'invention en fonction du taux de déshydrochloruration (t%) du PVC original.

Bien entendu l'invention n'est pas limitée aux modes de réalisation qui ont été décrits ci-dessus, notamment en ce qui concerne le choix des polymères conducteurs de base. Par ailleurs, les applications des compositions selon l'invention ne sont pas limitées aux applications électrotechnique. Elles peuvent être également utilisées dans le domaine électrochimique, par exemple pour la fabrication des câbles de liaisons électriques aériennes, et de tout câble de liaison électrique en contact avec l'air ou toute atmosphère oxydante.

## Revendications

1. Composition à base d'un polymère conducteur électronique, caractérisée par le fait que ledit polymère est à caractère unidimensionnel et qu'elle comporte en outre au moins une chaîne polysulfurée, ladite chaîne formant un complexe avec ce polymère.

2. Composition selon la revendication 1, caractérisée par le fait qu'au moins un atome de soufre de la chaîne polysulfurée est greffé sur le polymère, le reste de la chaîne étant en transfert de charges avec le polymère.

3. Composition selon la revendication 1, caractérisée par le fait que toute la chaîne polysulfurée est en transfert de charges avec le polymère.

4. Composition selon l'une des revendications 1 à 3, caractérisée par le fait qu'elle comporte au moins 0,7 atome de soufre par carbone du monomère dudit polymère.

5. Composition selon l'une des revendications 1 à 4, caractérisé par le fait que le polymère est choisi dans le groupe formé par les polyacétylènes, les polyparaphénylènes, les polythiophènes, les polypyrroles, les polyanilines, et leurs dérivés substitués.

6. Générateur électrochimique comportant un électrolyte non aqueux, une électrode négative à base de lithium, caractérisé par le fait que son électrode positive est à base de la composition selon l'une des revendications précédentes.

## Patentansprüche

1. Zusammensetzung auf der Basis eines elektronisch leitenden Polymers, dadurch gekennzeichnet, daß das Polymer einen eindimensionalen Charakter hat und außerdem mindestens eine Polysulfidkette aufweist, die mit dem Polymer einen Komplex bildet.

2. Zusammensetzung nach Anspruch 1, dadurch gekennzeichnet, daß mindestens ein Schwefelatom der Polysulfidkette auf das Polymer auf-gepfropft ist, während der Rest der Kette in Ladungstransportbindung mit dem Polymer steht.

3. Zusammensetzung nach Anspruch 1, dadurch gekennzeichnet, daß die Polysulfidkette in Ladungstransportbindung mit dem Polymer steht.

4. Zusammensetzung nach einem der Ansprüchen 1 bis 3, dadurch gekennzeichnet, daß sie mindestens 0,7 Schwefelatome je Kohlenstoffatom des Monomeren des Polymers aufweist.

5. Zusammensetzung nach einem der Ansprüche 1 bis 4, dadurch gekennzeichnet, daß das Polymer aus der Gruppe der Polyacetylene, Polyparaphenylene, Polythiophene, Polypyrrole, Polyaniline und ihrer substituierter Derivate ausgewählt wird.

6. Elektrochemischer Generator mit einem nicht-wäßrigen Elektrolyten und einer negativen Elektrode auf Basis von Lithium, dadurch gekennzeichnet, daß seine positive Elektrode eine solche auf Basis der Zusammensetzung nach einem der vorhergehenden Ansprüche ist.

**Claims**

1. A composition based upon an electron conducing polymer, characterized in that the polymer is of the one-dimensional type and comprises in addition at least one polysulphurated chain forming a complex with said polymer.

2. A substance according to claim 1, characterized in that at least one atom of sulphur in the polysulphurated chain is grafted onto the polymer, the remainder of the chain being charge transfer related to the polymer.

3. A substance according to claim 1, characterized in that all of the polysulphurated chain is charge transfer related to the polymer.

4. A substance according to claims 1 to 3, characterized in that it comprises at least 0,7 atom of sulphur per carbon atom of the monomer of the polymer.

5. A substance according to claims 1 to 4, characterized in that the polymer is selected from the group comprising polyacetylenes, polyparaphenylenes, polythiophenes, polypyrroles, polyanilines and their substituted derivatives.

6. An electrochemical generator comprising a non-aqueous electrolyte and a negative electrode based on lithium, characterized in that the positive electrode is based on a composition according to any of the preceding claims.

0 176 877

FIG.1

FIG.2

1

## FIG.3

## FIG.4